(19) Europäisches Patentamt

European Patent Office

Office européen des brevets

(11) **EP 3 746 774 B1**

(12) **FASCICULE DE BREVET EUROPEEN**

(45) Date de publication et mention
de la délivrance du brevet:
**28.08.2024 Bulletin 2024/35**

(21) Numéro de dépôt: **19710448.2**

(22) Date de dépôt: **25.01.2019**

(51) Classification Internationale des Brevets (IPC):
***G01N 21/3504*** *(2014.01)*

(52) Classification Coopérative des Brevets (CPC):
**G01N 21/3504;** G01N 2201/1293

(86) Numéro de dépôt international:
**PCT/FR2019/050165**

(87) Numéro de publication internationale:
**WO 2019/145649 (01.08.2019 Gazette 2019/31)**

(54) **PROCEDE ET DISPOSITIF D'ESTIMATION DES CONCENTRATIONS DE PLUSIEURS ESPECES GAZEUSES DIFFERENTES DANS UN ECHANTILLON DE GAZ**

VERFAHREN UND VORRICHTUNG ZUR BESTIMMUNG DER KONZENTRATIONEN MEHRERER VERSCHIEDENER GASE IN EINER GASPROBE

METHOD AND DEVICE FOR ESTIMATING THE CONCENTRATIONS OF MULTIPLE DIFFERENT GASES IN A GAS SAMPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2018 FR 1850683**

(43) Date de publication de la demande:
**09.12.2020 Bulletin 2020/50**

(73) Titulaire: **Elichens
38000 Grenoble (FR)**

(72) Inventeurs:
• **DUPREZ, Hélène
38170 Seyssinet-Pariset (FR)**
• **ZANINI, Paolo
38100 Grenoble (FR)**
• **CARITU, Yanis
38134 Saint-Joseph-de-Riviere (FR)**

(74) Mandataire: **INNOV-GROUP
310, avenue Berthelot
69372 Lyon Cedex 08 (FR)**

(56) Documents cités:
**WO-A2-2007/064370     US-A1- 2007 029 488**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

## DOMAINE TECHNIQUE

Le domaine technique de l'invention est l'analyse d'un gaz par une méthode optique.

## ART ANTERIEUR

Le recours à des méthodes optiques pour l'analyse d'un gaz est assez fréquent. Des dispositifs permettent de déterminer la composition d'un gaz en se basant sur le fait que les espèces composant un gaz présentent des propriétés spectrales d'absorption différentes les unes des autres. Ainsi, connaissant une bande spectrale d'absorption d'une espèce gazeuse, sa concentration peut être déterminée par une estimation de l'absorption de la lumière traversant le gaz, en utilisant la loi de Beer Lambert. Ce principe permet une estimation de la concentration d'une espèce gazeuse présente dans le milieu.

La demande de brevet WO 2007/064370 A2 repose sur un tel principe. Ce document décrit un dispositif d'analyse d'un gaz comportant une source de lumière et un photodétecteur. Un filtre optique est disposé entre la source de lumière et le photodétecteur. Ce filtre présente des bandes passantes étroites, typiquement de largeur inférieure à 500 nm, correspondant aux bandes spectrales d'absorption des espèces gazeuses à détecter. Un tel filtre est désigné par le terme "multibandes". Mais une telle configuration présente certains inconvénients. Tout d'abord, la réalisation d'un filtre optique présentant des bandes passantes étroites, séparées les unes des autres, est coûteuse. En outre, un tel filtre peut présenter des difficultés techniques de fabrication. Ce document indique d'ailleurs que lorsque le nombre de bandes spectrales augmente, le recours à un tel filtre est difficilement envisageable. De plus, cette configuration n'est pas versatile et ne fonctionne que pour les espèces gazeuses correspondant au filtre optique réalisé. Il n'est pas possible de quantifier la concentration d'une espèce gazeuse dont la bande spectrale d'absorption ne correspond pas à une bande passante du filtre, sauf à changer le filtre. Par ailleurs, certaines espèces gazeuses présentent des bandes spectrales d'absorption se chevauchant. L'utilisation du filtre multibandes ne permet pas de les séparer et le dispositif ne permet pas de discriminer ces espèces, c'est-à-dire de déterminer une concentration de chacune de ces espèces.

Le document US2009/213380 A1 décrit un dispositif d'analyse de gaz, dans lequel un gaz est illuminé successivement selon différents spectres d'illumination, à l'aide d'une source de lumière. A chaque illumination, le spectre d'illumination du gaz est modifié en interposant successivement différents filtres entre la source de lumière et le gaz à analyser. Un tel dispositif nécessite d'utiliser successivement plusieurs filtres, entre la source de lumière et le gaz, ce qui suppose des moyens mécaniques permettant une commutation entre les différents filtres. On comprend qu'une telle configuration est complexe et n'est pas appropriée à un détecteur de gaz compact et peu onéreux. Elle suppose, d'autre part, de disposer d'un a priori sur les espèces gazeuses présentes dans le gaz, de façon à sélectionner les filtres mis en oeuvre.

L'invention permet de surmonter ces inconvénients en proposant un dispositif et un procédé d'analyse d'un gaz simple, peu coûteux, et pouvant adresser différentes espèces gazeuses, y compris les espèces gazeuses dont les bandes spectrales d'absorption se recouvrent. De plus, le dispositif est aisément adaptable à différents mélanges gazeux ; il ne nécessite pas la réalisation d'un filtre multibandes spécifique à chaque mélange gazeux étudié. Par ailleurs, le nombre d'espèces gazeuses présentes dans le mélange n'est pas limité par des contraintes de conception d'un filtre. En outre, l'invention ne nécessite pas des moyens de calculs puissants. En cela, elle s'applique particulièrement à des capteurs de gaz nomades, dont la consommation en énergie doit être minimisée.

## EXPOSE DE L'INVENTION

Un premier objet de l'invention est un procédé d'analyse d'un gaz selon la revendication 1. Des modes de réalisation préférés du procédé sont définis dans les revendications dépendantes 2 à 10.

Un autre objet de l'invention est un dispositif d'analyse d'un gaz selon la revendication 11.

## FIGURES

La figure 1 représente un exemple de dispositif d'analyse d'un gaz selon un mode de réalisation.

La figure 2 montre l'évolution du spectre d'illumination d'une source de lumière de type corps noir en fonction de la température.

La figure 3 représente des spectres d'absorbance de différentes espèces gazeuses.

La figure 4 illustre les principales étapes d'un procédé d'analyse d'un gaz selon l'invention.

Les figures 5A et 5B représentent d'autres configurations de dispositifs d'analyse permettant une mise en oeuvre de l'invention.

Les figures 6A à 6G montrent des résultats de simulations de fonctionnement d'un dispositif d'analyse, le gaz analysé étant un mélange $CO_2$ et $CH_4$.

## EXPOSE DE MODES DE REALISATION PARTICULIERS

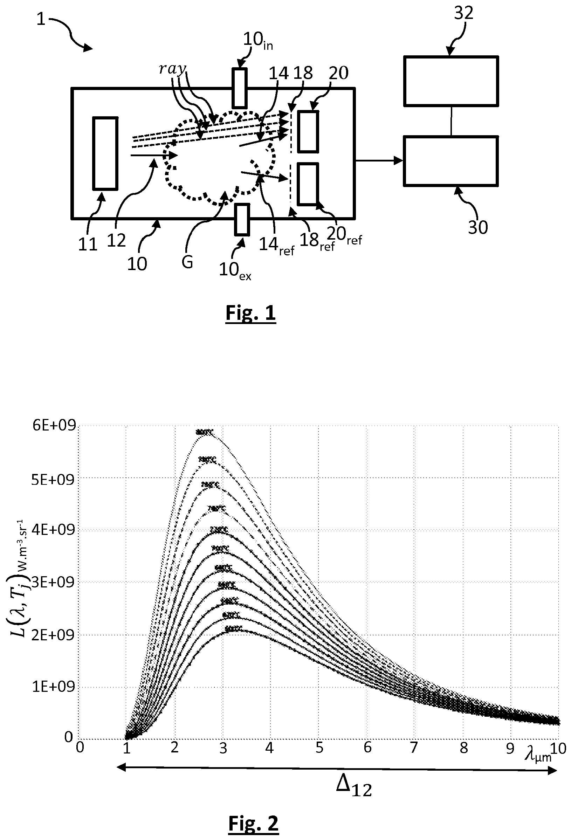

La figure 1 est un exemple d'un dispositif d'analyse 1 de gaz. Le gaz G est un mélange gazeux comportant une pluralité d'espèces gazeuses d'intérêt $G_1...G_k...G_K$, $K$ étant un entier positif quantifiant le nombre d'espèces gazeuses différentes présentes dans le mélange.

Le dispositif comporte une enceinte 10 définissant un espace interne à l'intérieur duquel se trouvent :

- une source de lumière 11, apte à émettre successivement un rayonnement d'illumination 12, selon différents spectres d'illumination $S_j$, de façon à illuminer un gaz G s'étendant dans l'espace interne ;
- un photodétecteur de mesure 20, apte à détecter un rayonnement lumineux 14 transmis par le gaz G sous l'effet de son illumination par le rayonnement d'illumination 12 ;
- un photodétecteur de référence $20_{ref}$, apte à détecter un rayonnement lumineux $14_{ref}$ transmis par le gaz G dans une bande spectrale de référence $\Delta\lambda_{ref}$ sous l'effet de son illumination par le rayonnement d'illumination 12.

L'enceinte peut comporter une admission $10_{in}$ et une évacuation $10_{ex}$ permettant respectivement l'admission du gaz dans l'enceinte et son évacuation. L'admission et/ou l'évacuation du gaz peut être forcée ou spontanée. Ainsi, le gaz peut traverser l'enceinte par un simple effet de diffusion.

Le photodétecteur de mesure 20 est associé à un filtre de mesure 18. Le photodétecteur de référence $20_{ref}$ est associé à un filtre de référence $18_{ref}$. Les fonctions du filtre de mesure 18 et du filtre de référence $18_{ref}$ sont précisées dans la suite de la description, en lien avec l'équation (3). Le photodétecteur de mesure 20 détecte le rayonnement lumineux transmis 14 dans une bande spectrale de détection $\Delta_{20}$, cette dernière étant limitée par le filtre de mesure 18.

Le photodétecteur de mesure 20 et le photodétecteur de référence $20_{ref}$ peuvent être spectralement non résolus. Il peut en particulier s'agir de photodiodes ou de thermopiles. Le photodétecteur de référence est optionnel.

La source de lumière 11 est apte à émettre le rayonnement d'illumination 12 selon une pluralité de spectres d'illumination différents $S_1..S_j..S_J$, différents les uns des autres, dans une même bande spectrale d'illumination $\Delta_{12}$, où $J$ est un entier désignant le nombre de spectres. $J \geq 1$. $j$ est un entier indiçant chaque spectre d'illumination $S_j$, avec $1 \leq j \leq J$. Par spectre d'illumination, on entend un histogramme de l'intensité $I(\lambda)$ d'un rayonnement lumineux en fonction de la longueur d'onde $\lambda$. Le spectre de la source de lumière définit une bande spectrale d'illumination $\Delta_{12}$, cette dernière pouvant s'étendre entre le proche ultraviolet et l'infra-rouge moyen, entre 200 nm et 10 $\mu$m, et le plus souvent entre 1 $\mu$m et 10 $\mu$m. A chaque illumination j par la source de lumière correspond un spectre d'illumination $S_j$.

Le dispositif comporte un processeur 30, par exemple un microprocesseur. Ce dernier est configuré pour recevoir un signal représentatif d'une intensité lumineuse détectée par le photodétecteur de mesure 20, et de l'éventuel photodétecteur de référence $20_{ref}$. Il permet d'exécuter les opérations de traitement décrites ci-après, de façon à déterminer une quantité de chaque espèce gazeuse recherchée. Le processeur 30 est relié à une mémoire 32 comportant des instructions permettant la mise en oeuvre de certaines étapes du procédé décrit ci-après.

Selon un mode de réalisation préféré, les différents spectres d'illumination $S_j$ sont obtenus en modulant une température de la source de lumière 11. Cette dernière peut alors être une source de lumière de type corps noir ou corps gris. Selon un autre mode de réalisation, les différents spectres d'illumination sont obtenus en utilisant une source de lumière 11 regroupant une pluralité de sources de lumières élémentaires $11_1....11_N$, où N est un entier positif désignant le nombre de sources de lumières élémentaires constituant la source. Les sources de lumière élémentaires peuvent être des diodes électroluminescentes dont l'éclairement peut être modulé de façon à former différents spectres d'illumination dans la bande spectrale d'illumination $\Delta_{12}$.

La figure 2 montre différents spectres d'illumination $S_j$ d'une source de lumière 11, assimilée à une source dite de type corps noir, en fonction d'une température $T_j$ à laquelle est portée la source de lumière. Les spectres $S_j$ suivent la loi de Planck, décrivant l'émission d'un corps noir selon une expression de type

$$L(\lambda, T_j) = \frac{2hc^2}{\lambda^5} \frac{1}{e^{\frac{hc}{\lambda k T_j}} - 1}, \quad (1)$$

où

- $L(\lambda, T_j)$ est la luminance spectrale, dépendant de la longueur d'onde $\lambda$ et de la température de surface $T_j$ du corps noir,
- h est la constante de Planck,
- k est la constante de Boltzmann,
- c est la vitesse de la lumière dans le vide.

Une telle source de lumière est par exemple obtenue par un simple filament chauffé à une température comprise par exemple entre 400°C et 800°C. Dans le cas de la figure 2, on a représenté l'évolution de la luminance spectrale $L(\lambda, T_j)$ dans une plage de température comprise entre 600°C et 800 °C et selon une bande spectrale d'illumination $\Delta_{12}$ comprise entre 1 $\mu$m et 10 $\mu$m.

Ce type de source de lumière est particulièrement avantageux, car cela permet de moduler le spectre d'illumination Si par une simple modulation de la température $T_j$ de la source. A chaque température $T_j$ est associé un spectre d'illumination $S_j$. La modulation de la température de source peut être par exemple obtenue par une simple modulation d'un courant d'alimentation de la source de lumière. De plus, la modulation du spectre d'illumination est non linéaire. Par modulation non linéaire, on entend qu'en considérant respectivement un premier spectre d'illumination $S_j$ et un deuxième spectre d'illumination $S_{j+1}$, la modulation est telle que le ratio des intensités du spectre d'illumination entre une première longueur d'onde $\lambda_1$ et une deuxième longueur d'onde $\lambda_2$ est différent d'un spectre d'illumination à l'autre. Ceci peut être explicité par l'expression suivante :

$$\frac{S_j(\lambda_1)}{S_j(\lambda_2)} \neq \frac{S_{j+1}(\lambda_1)}{S_{j+1}(\lambda_2)} \ (2)$$

où $S_j(\lambda_i)$ désigne la valeur de l'intensité, à une longueur d'onde $\lambda_j$, du rayonnement d'illumination 12 de spectre $S_j$.

La plupart des espèces gazeuses connues absorbent tout ou partie d'un rayonnement électromagnétique selon un spectre d'absorption présentant une ou plusieurs bandes spectrales d'absorption $\Delta_k$, ainsi qu'un ou plusieurs pics d'absorption. L'absorption d'une espèce gazeuse $G_k$ peut être définie selon la loi de Beer-Lambert, selon laquelle :

$$I(\lambda) = \sum_{ray} I_0(\lambda, ray) e^{-\mu_k(\lambda) x_{ray}} \ (3)$$

où :

- $I(\lambda)$ désigne l'intensité transmise par l'espèce gazeuse $G_k$ à la longueur d'onde $\lambda$, c'est-à-dire l'intensité du rayonnement détecté 14 à la longueur d'onde $\lambda$;
- $I_0(\lambda, ray)$ désigne l'intensité incidente à l'espèce gazeuse $G_k$ à la longueur d'onde $\lambda$, c'est-à-dire l'intensité du rayonnement d'illumination 12 à la longueur d'onde $\lambda$, selon une trajectoire $ray$ prédéterminée. Cela correspond à l'intensité du rayonnement parvenant au photodétecteur de mesure 20, selon la trajectoire $ray$, sans atténuation par l'espèce gazeuse $G_k$. Il s'agit d'une intensité dite non atténuée.
- $\mu_k(\lambda)$ désigne un coefficient d'absorption dit linéaire de l'espèce gazeuse $G_k$ considérée, à la longueur d'onde $\lambda$ ;
- $x_{ray}$ désigne la distance traversée par chaque rayonnement lumineux selon chaque trajectoire $ray$ entre la source de lumière 11 et le photodétecteur de mesure 20.

Le filtre de mesure 18, auquel est associé le photodétecteur de mesure 20, permet de délimiter la bande spectrale de mesure du rayonnement 14 transmis par le gaz. Cela permet par exemple d'éviter que les mesures soient influencées par des bandes d'absorption de la vapeur d'eau, ces dernières étant situées autour de 2.6 $\mu$m ainsi qu'entre 5.5 et 7.5 $\mu$m.

Le filtre optique de référence $18_{ref}$ définit la bande spectrale de référence $\Delta\lambda_{ref}$, correspondant à une plage de longueurs d'onde non absorbées, ou de façon négligeable, par le gaz G analysé. La bande spectrale de référence est par exemple centrée autour de la longueur d'onde de référence $\lambda_{ref}$ 3.91 $\mu$m. Le photodétecteur de référence $20_{ref}$, permet de mesurer une intensité de référence $I_{j,ref}$. A partir de cette dernière, on peut estimer une intensité $I_{j,ref}$ émise par la source de lumière 11 dans la bande spectrale de référence $\Delta\lambda_{ref}$. La connaissance du spectre d'émission $S_j$ permet, à partir de $I_{j,ref}$, d'obtenir les intensités d'émission aux différentes longueurs d'onde de la bande spectrale d'illumination $\Delta_{12}$ et de la bande spectrale de détection $\Delta_{20}$. Ainsi, l'intensité de référence $I_{j,ref}$ permet d'estimer une intensité $\hat{I}_{0,j}$, non atténuée, qui serait mesurée par le photodétecteur de mesure 20 en l'absence d'atténuation par le gaz G dans l'enceinte 10. Le recours à un photodétecteur de référence $20_{ref}$, pour estimer l'intensité non atténuée $\hat{I}_{0,j}$ mesurée en l'absence d'atténuation par le gaz, est utile lorsque l'intensité de la source de lumière varie dans le temps, notamment en raison d'un vieillissement de la source de lumière.

Le coefficient d'absorption linéaire $\mu_k(\lambda)$ peut être exprimé sous la forme d'un produit d'un coefficient d'absorp-

tion linéaire molaire $\mu_k'(\lambda)$ par une quantité $c_k$ de l'espèce gazeuse $G_k$. Le coefficient d'absorption linéaire molaire représente le coefficient d'absorption linéaire par mole de l'espèce gazeuse considérée.

L'expression (3) devient :

$$I(\lambda) = \sum_{ray} I_0(\lambda, ray)e^{-\mu_k'(\lambda)c_k x_{ray}} \quad (4)$$

Ainsi,

$$I(\lambda) = \sum_{ray} I_0(\lambda, ray)e^{-\mu_k'(\lambda)c_k x_{ray}} = \sum_{ray} I_0(\lambda, ray)h_k(c_k, \lambda, x_{ray}) \quad (5)$$

où

$$h_k(c_k, \lambda, x) = e^{-\mu_k'(\lambda)c_k x_{ray}} = e^{-\mu_k(\lambda)x_{ray}} \quad (6),$$

, $h_k$ désignant une fonction spectrale d'absorption de l'espèce gazeuse $G_k$ lorsqu'un rayonnement de longueur d'onde $\lambda$ parcourt une distance $x_{ray}$ dans le gaz. Cette fonction représente une proportion du rayonnement d'illumination absorbé par l'espèce gazeuse $G_k$.

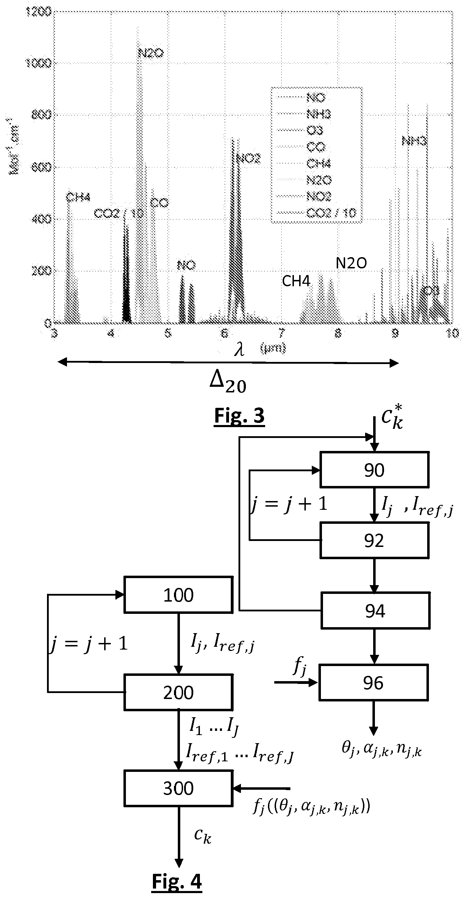

La figure 3 montre les spectres d'absorption, c'est-à-dire l'évolution du coefficient d'absorption linéaire molaire $\mu_k'(\lambda)$ de différentes espèces gazeuses, en fonction de la longueur d'onde. On constate que ces spectres d'absorption présentent des pics d'absorption dans différentes bandes spectrales, dites bandes spectrales d'absorption $\Delta_k$.

Par pic d'absorption, on entend un maximum local de l'évolution de l'absorption en fonction de la longueur d'onde. Par bande spectrale d'absorption $\Delta_k$, on entend une bande spectrale dans laquelle l'absorption est considérée comme significative, c'est-à-dire supérieure à 50 Mol$^{-1}$.cm$^{-1}$, ou 100 Mol$^{-1}$.cm$^{-1}$ voire 200 Mol$^{-1}$cm$^{-1}$ lorsque l'absorption est quantifiée par le coefficient d'absorption linéaire molaire. Le $CO_2$ dont on a représenté le dixième de la valeur du coefficient d'absorption linéaire molaire, présente une bande spectrale d'absorption entre 4.2 $\mu$m et 4.4 $\mu$m. Le $N_2O$ présente une première bande spectrale d'absorption comprise entre 4.3 $\mu$m et 4.6 $\mu$m, ainsi qu'une deuxième bande spectrale d'absorption entre 7.5 $\mu$m et 8 $\mu$m. Le CO comprend une bande spectrale d'absorption entre 4.5 $\mu$m et 4.8 $\mu$m. On constate que les bandes spectrales d'absorption du $N_2O$ et du CO se recouvrent partiellement.

Selon l'invention le spectre d'illumination $S_j$ s'étend selon une bande spectrale d'illumination $\Delta_{12}$ comprenant les bandes spectrales d'absorption de différentes d'espèces gazeuses recherchées. Ainsi, le gaz analysé est éclairé par un rayonnement d'illumination 12 selon une bande spectrale d'illumination $\Delta_{12}$ dont la largeur spectrale est de préférence supérieure à 500 nm, voire à 1 $\mu$m, voire à 3 $\mu$m. Par largeur spectrale, on entend une différence entre la longueur d'onde la plus élevée et la longueur d'onde la plus faible de la bande spectrale d'illumination de la source. Le photodétecteur de mesure 20 détecte le rayonnement 14 transmis par le gaz G dans la bande spectrale de détection $\Delta_{20}$ dont la largeur spectrale est de préférence supérieure à 500 nm, voire à 1 $\mu$m, voire à 3 $\mu$m.

Selon un mode de réalisation, contrairement au dispositif décrit dans WO 2007/064370 A2 le rayonnement lumineux 14 transmis par l'échantillon est détecté par le photodétecteur de mesure 20 dans une bande spectrale de détection $\Delta_{20}$ s'étendant continûment entre une longueur d'onde minimale $\lambda_{20\text{-}min}$ et une longueur d'onde maximale $\lambda_{20\text{-}max}$. La bande spectrale de détection $\Delta_{20}$ comporte la bande spectrale d'absorption $\Delta_k$ d'au moins deux espèces gazeuses d'intérêt $G_k$. De préférence, la largeur de la bande spectrale de détection $\Delta_{20}$ s'étend sans discontinuité selon au moins 500 nm, voire 1 $\mu$m, voire encore davantage, par exemple selon un intervalle spectral supérieur à 2 $\mu$m ou à 5 $\mu$m. Ainsi, il n'est pas nécessaire d'interposer un filtre multibandes présentant différentes bandes passantes, dont chaque bande passante est adaptée à une espèce gazeuse $G_k$ à détecter. Selon ce mode de réalisation, on peut, avec le même dispositif, déterminer les quantités d'espèces gazeuses dans différents mélanges, en adaptant le traitement, par le processeur 30, des intensités détectées, en fonction des espèces gazeuses $G_k$ susceptibles d'être présentes dans le gaz. Par exemple, la bande spectrale de détection $\Delta_{20}$ s'étend entre 3 $\mu$m et 8 $\mu$m. Le même dispositif 1 peut alors permettre une détermination des concentrations de $CO_2$, $CH_4$ et CO dans un mélange de gaz naturel, ou une détermination des concentrations de NO et $NO_2$ dans un mélange de type NOx. Les espèces gazeuses d'intérêt sont déterminées a priori, en fonction de l'application et/ou du mélange gazeux analysé.

Le terme continûment signifie que le signal détecté par le photodétecteur de mesure 20 comporte toutes les longueurs d'onde entre la longueur d'onde minimale $\lambda_{20\text{-}min}$ et la longueur d'onde maximale $\lambda_{20\text{-}max}$ évoquées ci-dessus.

Un aspect important de l'invention est que le gaz analysé G est soumis à une pluralité $J$ d'illuminations successives, respectivement selon différents rayonnements d'illumination 12, chacun présentant un spectre d'illumination $S_j$ adressant les bandes spectrales d'absorption des espèces gazeuses d'intérêt. De préférence, les rayonnements d'illumination s'étendent selon une même bande spectrale d'illumination $\Delta_{12}$ mais leurs spectres respectifs $S_j$, dans cette bande spectrale, fluctuent entre chaque illumination. Sur la figure 2, on a représenté différents spectres $S_j$ dans une même bande spectrale d'illumination $\Delta_{12}$ s'étendant entre 1 $\mu$m et 10 $\mu$m.

A chaque illumination selon un spectre $S_j$, le photodétecteur de mesure 20 détecte un rayonnement 14 transmis par le gaz, dans la bande spectrale de détection $\Delta_{20}$ précédemment décrite. Le photodétecteur de mesure 20 délivre un signal dont l'intensité $I_j$ est représentative de l'intensité transmise par le gaz lorsqu'il est illuminé par le rayonnement d'illumination de spectre $S_j$. Cette intensité peut être estimée par l'expression suivante :

$$\hat{I}_j = \int_\lambda \sum_{ray} I_{0,j}(\lambda, ray) \prod_{k=1}^{K} h_k(c_k, \lambda, x_{ray}) \delta\lambda = \int_\lambda \sum_{ray} I_{0,j}(\lambda, ray) \prod_{k=1}^{K} e^{-\mu_k'(\lambda) c_k x_{ray}} \delta\lambda$$

(7)

$\hat{I}_j$ est une estimation de l'intensité du rayonnement d'illumination 14 transmis par le gaz G dans toutes les longueurs d'onde $\hat{\lambda}$ de la bande spectrale de détection $\Delta_{20}$ lorsque le gaz comporte une concentration $c_k$ d'espèces gazeuses $G_k$.

Le photodétecteur de mesure 20 n'étant pas spectralement résolu, l'intensité $I_j$ correspond à une intensité dans la bande spectrale de détection $\Delta_{20}$.

Après discrétisation selon la longueur d'onde,

$$\hat{I}_j = \sum_\lambda \sum_{ray} I_{0,j}(\lambda, ray) \prod_k e^{-\mu_k'(\lambda) c_k x_{ray}} \delta\lambda \ (8)$$

où $\delta\lambda$ correspond au pas de discrétisation en longueur d'onde.

Si K désigne le nombre d'espèces gazeuses d'intérêt $G_k$ dont on souhaite déterminer la quantité $c_k$ dans le gaz G, on effectue $J$ séquences d'illumination / détection, de façon à obtenir $J$ signaux de détection, d'intensité $\hat{I}_j$ telle qu'estimée par l'expression (8). Chaque signal de détection est détecté, de préférence, dans la même bande spectrale de détection $\Delta_{20}$. De préférence, le nombre $J$ de spectres d'émission $S_j$ différents les uns des autres est supérieur ou égal au nombre $K$ d'espèces gazeuses d'intérêt : $J \geq K$.

Selon une possibilité, par exemple décrite dans la demande de brevet FR1658243, les intensités mesurées $I_j$ sont traitées par le microprocesseur 30 relié à la mémoire 32, dans laquelle sont stockées différentes grandeurs, notamment les fonctions spectrales d'absorption $h^k(c_k, \lambda, x)$ de chaque espèce gazeuse d'intérêt. La détermination de la quantité $c_k$ de chaque espèce gazeuse d'intérêt $G_k$ peut alors être obtenue par une minimisation d'une somme d'écarts quadratiques respectivement calculés lors de chaque illumination j. Chaque écart quadratique correspond à une comparaison entre une mesure de l'intensité $I_j$ et son estimation $\hat{I}_j$. Les quantités $c_1 \ldots c_K$ recherchées sont obtenues selon l'expression :

$$(c_1 \ldots c_K) = arg\min \sum_j \left(I_j - \hat{I}_j\right)^2$$

$$= arg\min \sum_j \left(I_j - \sum_\lambda \sum_{ray} I_{0,j}(\lambda, ray) \prod_{k=1}^{K} e^{-\mu_k'(\lambda) c_k x_{ray}} \delta\lambda\right)^2 (9)$$

Une telle approche est fiable, mais l'algorithme de minimisation suppose le recours à un microprocesseur doté d'une puissance de calcul élevé, en particulier du fait des discrétisations selon $\lambda$ et selon $x_{ray}$ nécessaires pour l'estimation de $\hat{I}_j$. Une telle puissance de calcul peut être difficile à embarquer, en particulier dans des dispositifs nomades. De plus, elle s'accompagne d'une consommation électrique importante.

Les inventeurs proposent une alternative, visant à obtenir une estimation $\hat{I}_j$ par une fonction paramétrique, nécessitant moins de temps de calcul que l'estimation décrite en lien avec l'expression (8). En particulier, la fonction paramétrique ne suppose pas une discrétisation selon la longueur d'onde $\hat{\lambda}$ et selon la distance $x_{ray}$ parcourue par le rayonnement dans le gaz.

L'approche proposée est basée sur l'utilisation d'une fonction paramétrique $f_{\theta_j, \alpha_{j,k}, n_{j,k}}$, de telle sorte que

$$\hat{I}_j = \hat{I}_{0,j} f_{\theta_j, \alpha_{j,k}, n_{j,k}}(c_1 \ldots c_K) = \hat{I}_{0,j}\left(1 - \theta_j\left(1 + \prod_{k=1}^{K} e^{-\alpha_{j,k} c_k^{n_{j,k}}}\right)\right) (10)$$

où :

- $\hat{I}_{0,j}$ est une estimation de l'intensité incidente au gaz G dans la bande spectrale de détection $\Delta_{20}$. Il s'agit également de l'intensité qui serait mesurée par le photodétecteur de mesure 20 en l'absence d'absorption dans le gaz. Comme préalablement indiqué, cette intensité peut être obtenue à partir de la mesure de l'intensité de référence $I_{j,ref}$ lors de l'illumination selon le spectre d'illumination $S_j$, l'intensité de référence $I_{j,ref}$ étant mesurée à l'aide du photodétecteur de référence $20_{ref}$.
- $\theta_j$ est un paramètre dépendant du spectre d'illumination $S_j$. Il s'agit d'un réel.
- $\alpha_{j,k}$ est un paramètre dépendant du spectre d'illumination $S_j$ et de l'espèce gazeuse d'intérêt $G_k$.
- $n_{j,k}$ est un paramètre dépendant du spectre d'illumination $S_j$ et de l'espèce gazeuse d'intérêt $G_k$.

$f_{\theta_j,\alpha_{j,k},n_{j,k}}$ est une fonction paramétrique, dite de réponse, dont les paramètres sont $\theta_j$, $\alpha_{j,k}$ et $n_{j,k}$. Le paramètre $\theta_j$ ne dépend que du spectre d'illumination $S_j$, donc de la température $T_j$ lorsque la source de lumière 11 est modulée en température. Les paramètres $\alpha_{j,k}$ et $n_{j,k}$ dépendent de chaque espèce gazeuse $G_k$ et du spectre d'illumination $S_j$. Il s'agit de paramètres spécifiques, pouvant varier d'une espèce gazeuse à une autre. Pour un spectre d'illumination $S_j$, les paramètres $\theta_j$, $\alpha_{j,k}$ et $n_{j,k}$ sont des constantes dans la bande spectrale de détection $\Delta_{20}$. Leurs valeurs respectives ne varient pas en fonction de la longueur d'onde. Cela permet de minimiser la quantité d'information à stocker dans la mémoire 32. La fonction paramétrique de réponse $f_{\theta_j,\alpha_{j,k},n_{j,k}}$ permet de modéliser, en prenant en compte un nombre limité de paramètres, l'absorption du rayonnement d'illumination 12 par le gaz G.

Le recours à la fonction paramétrique de réponse $f_{\theta_j,\alpha_{j,k},n_{j,k}}$ permet une estimation simple et rapide de l'intensité $\hat{I}_j$, sans nécessiter une puissance de calcul importante. La fonction paramétrique de réponse $f_{\theta_j,\alpha_{j,k},n_{j,k}}$ est une approximation de la fonction d'atténuation, de telle sorte que :

$$\hat{I}_j = \hat{I}_{0,j} f_{\theta_j,\alpha_{j,k},n_{j,k}}(c_1 \dots c_K) \cong \sum_\lambda \sum_{ray} \prod_{k=1}^K I_{0,j}(\lambda,ray) e^{-\mu'_k(\lambda)c_k x_{ray}} \delta\lambda \ (11).$$

Ainsi, à partir des intensités mesurées pour différents spectres d'illumination $S_j$, on obtient les quantités $c_1 \dots c_K$ des espèces gazeuses recherchées par une minimisation de type :

$$(c_1 \dots c_K) = arg\min \sum_j \left(I_j - \hat{I}_j\right)^2$$

$$= arg\min \sum_j \left(I_j - \hat{I}_{0,j} f_{\theta_j,\alpha_{j,k},n_{j,k}}(c_1 \dots c_K)\right)^2 \ (12)$$

Dans l'expression (12), l'intensité mesurée $I_j$ est une grandeur représentative de l'absorption du rayonnement d'illumination 12 par le gaz G. D'une façon générale, les quantités $c_1 \dots c_K$ des espèces gazeuses recherchées peuvent être obtenues en comparant, lors de chaque illumination j, une grandeur mesurée, représentative de l'absorption du rayonnement d'illumination 12 par le gaz G, avec une estimation de cette grandeur. Les quantités $c_1 \dots c_K$ sont celles pour lesquelles une combinaison arithmétique de chaque comparaison prend une valeur prédéterminée. Dans l'exemple correspondant à l'expression (12), la comparaison est un écart quadratique, et la combinaison est une somme. La valeur prédéterminée est alors égale à 0. La comparaison peut être également un ratio. La combinaison arithmétique peut comprendre une somme, et/ou un produit, et/ou une division. Dans l'expression (12), la grandeur représentative de l'absorption du rayonnement d'illumination par le gaz est l'intensité mesurée par le photodétecteur de mesure 20 lors de chaque illumination. Selon une variante, cette grandeur peut être l'intensité $I_j$ mesurée par le photodétecteur de mesure 20 normalisée par l'intensité non absorbée $\hat{I}_{0,j}$ précédemment décrite, ou toute autre grandeur exprimant l'absorption du rayonnement d'illumination 12 par le gaz G.

La fonction paramétrique de réponse $f_{\theta_j,\alpha_{j,k},n_{j,k}}$ peut être apprise sur la base d'expressions théoriques de la loi de Beer-Lambert, selon les expressions (7) ou (8). Elle peut également être apprise au cours d'une phase d'apprentissage, durant laquelle on introduit un gaz de calibration comportant des quantités $c_k^*$ connues d'espèces gazeuses d'intérêt, dites quantités de calibration. La phase de calibration consiste, pour chaque spectre d'illumination $S_j$, à effectuer plusieurs mesures en modifiant, à chaque mesure, les quantités $c_k^*$ des espèces gazeuses d'intérêt dans le gaz de calibration. La phase de calibration est mise en oeuvre en utilisant le photodétecteur de mesure ou un photodétecteur de calibration considéré comme représentatif du photodétecteur de mesure. En fonction des intensités $I_j(c_k^*)$ mesurées par le photodétecteur utilisé lors de la calibration, dites intensités de calibration, on ajuste au moins un des paramètres $\theta_j$, $\alpha_{j,k}$, $n_{j,k}$ de la fonction de réponse, après avoir pris en compte la forme de la fonction paramétrique. Dans l'exemple présenté ci-dessus, la forme de la fonction de réponse est :

$$f_{\theta_j,\alpha_{j,k},n_{j,k}}(c_1 \dots c_K) = \left(1 - \theta_j \left(1 + \prod_{k=1}^{K} e^{-\alpha_{j,k}c_k^{n_{j,k}}}\right)\right) \quad (13)$$

La figure 4 résume les principales étapes d'un procédé selon l'invention.

Les étapes 90 à 96 concernent la phase de calibration, permettant d'établir les paramètres $\theta_j$, $\alpha_{j,k}$, $n_{j,k}$ de la fonction de réponse $f_{\theta_j,\alpha_{j,k},n_{j,k}}$

Dans l'expression (13), l'absorption du rayonnement d'illumination par le gaz est modélisée par l'exponentielle décroissante. Selon une variante, l'exponentielle décroissante peut être approximée par un polynôme, par exemple un développement limité, ce type d'approximation polynomiale étant usuel en mathématique. Ainsi, la fonction paramétrique comporte une exponentielle décroissante ou une approximation d'une exponentielle décroissante. Par ailleurs, la fonction de réponse peut être une approximation de la fonction explicitée dans (13).

Etape 90 : introduction d'un gaz de calibration comportant des quantités de calibration $c_k^*$ connues d'espèces gazeuses d'intérêt, par exemple $CH_4$ et $CO_2$ et illumination du gaz de calibration selon un spectre de calibration $S_j$.

Etape 92 : détection de l'intensité $I_j(c_k^*)$ de calibration, et estimation, à partir d'une mesure de référence $I_{j,ref}$, de l'intensité $\hat{I}_{0,j}$ incidente au gaz de calibration, cette dernière correspondant également à l'intensité qui serait détectée par le photodétecteur utilisé lors de la calibration en l'absence de gaz de calibration. Les étapes 90 à 92 sont réitérées en modifiant le spectre d'illumination $S_j$.

Etape 94 : modification des quantités de calibration $c_k^*$ et réitération des étapes 90 à 92.

Etape 96 : lors de l'étape 96, on dispose, pour chaque spectre d'illumination $S_j$, de valeurs d'intensités $I_j(c_k^*)$ correspondant aux quantités de calibration $c_k^*$ respectivement utilisées. L'étape 96 est la définition de la fonction de réponse $f_{\theta_j,\alpha_{j,k},n_{j,k}}$. On considère une forme paramétrique prédéterminée, par exemple:

$$f_{\theta_j,\alpha_{j,k},n_{j,k}}(c_1^* \dots c_K^*) = \left(1 - \theta_j\left(1 + \prod_{k=1}^{K} e^{-\alpha_{j,k}c_k^{n_{j,k}}}\right)\right),$$

et on détermine, pour chaque spectre d'illumination $S_j$, le jeu de paramètres $(\theta_j, \alpha_{j,k}, n_{j,k})$ présentant une meilleure attache aux données. Il s'agit par exemple de minimiser les erreurs entre

$$\frac{I_j(c_1^* \dots c_K^*)}{I_{0,j}} \text{ et } f_{\theta_j,\alpha_{j,k},n_{j,k}}(c_1^* \dots c_K^*).$$

Les paramètres $\alpha_{j,k}$ ou $n_{j,k}$ peuvent être déterminés, pour différents spectres d'illumination $S_j$, en utilisant un photodétecteur de calibration représentatif du photodétecteur de mesure 20. Le paramètre $\theta_j$ correspond à un facteur de recalage. Il est de préférence déterminé sur chaque photodétecteur de mesure 20, car il peut varier significativement entre deux photodétecteurs de mesure différents. Ainsi, les paramètres $\alpha_{j,k}$ ou $n_{j,k}$ peuvent être communs à différents dispositifs d'analyse 1, le paramètre $\theta_j$ étant ajusté sur chaque dispositif d'analyse 1.

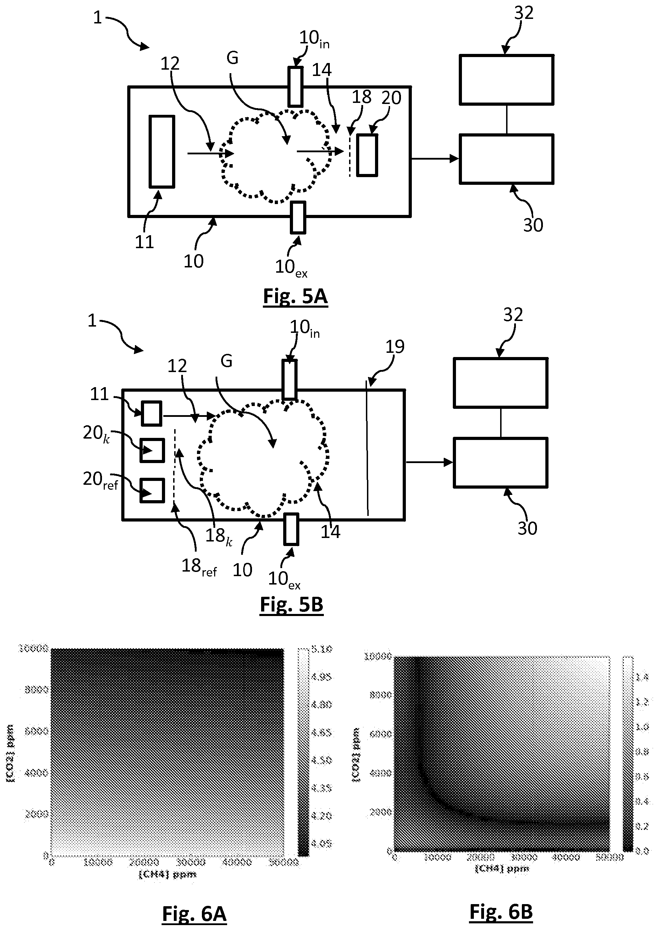

La figure 6A montre un exemple de détermination des paramètres d'une fonction de réponse par ajustement selon des points expérimentaux obtenus par modélisation. Cette figure est décrite ultérieurement, en lien avec des modélisations expérimentales réalisées.

La fonction de réponse $f_{\theta_j,\alpha_{j,k},n_{j,k}}$ étant définie, on peut procéder à une estimation des quantités d'espèces gazeuses $c_k$ d'un gaz inconnu G.Pour cela, le gaz à analyser est introduit dans l'enceinte 10 et on procède aux étapes suivantes

Etape 100 : illumination du gaz selon un spectre d'illumination $S_j$ et mesure de l'intensité $I_j$ du rayonnement 14

transmis par le gaz, ainsi que de l'intensité de référence $I_{ref,j}$.

Etape 200 : Réitération de l'étape 100 en modifiant le spectre d'illumination $S_j$

Etape 300 : à partir des intensités de mesure $I_j$, des intensités de référence $I_{ref,j}$ obtenues lors de chaque étape 100, et de la fonction de réponse $f_{\theta_j, \alpha_{j,k}, n_{j,k}}$ correspondant à chaque spectre d'illumination $S_j$, estimation des quantités d'espèces gazeuses d'intérêt $c_k$ en utilisant l'expression (12).

L'obtention des quantités $c_k$ par minimisation d'une somme d'écarts quadratiques, selon l'expression (12), suppose le recours à un algorithme de minimisation suffisamment rapide et peu coûteux en mémoire. Pour chaque spectre d'illumination $S_j$, les fonctions de réponse $f_{\theta_j, \alpha_{j,k}, n_{j,k}}$ sont non linéaires. Les inventeurs ont considéré qu'un algorithme de type moindres carrés non linéaire était adapté, comme décrit ultérieurement en lien avec des essais modélisés.
Les figures 5A à 5B montrent différentes configurations d'un dispositif d'analyse 1 permettant une mise en oeuvre de l'invention. Sur la figure 5A, on utilise un unique photodétecteur 20, lequel peut être successivement associé à un filtre de mesure 18 ou à un filtre de référence $18_{ref}$ tels que précédemment décrits. Une telle configuration nécessite un moyen mécanique pour effectuer une commutation entre le filtre de mesure 18 et le filtre de référence $18_{ref}$. Ce moyen peut par exemple être une roue à filtre. Sur la figure 5B, on a représenté une configuration en réflexion, selon laquelle le rayonnement traverse le gaz jusqu'à une surface réfléchissante 19, dans la bande spectrale d'illumination $\Delta_{12}$, avant d'atteindre le photodétecteur de mesure 20 et le photodétecteur de référence $20_{ref}$.
Les inventeurs ont simulé une mise en oeuvre de la méthode de mesure précédemment décrite, en simulant une détection d'une quantité de $CH_4$ et d'une quantité de $CO_2$ dans un gaz comportant une concentration progressivement croissante de $CH_4$ et une concentration fixe de 400 ppm de $CO_2$. Une telle simulation peut être représentative de la survenue d'une fuite de $CH_4$ dans de l'air, au cours de laquelle la quantité de $CH_4$ augmente progressivement.
La figure 6A représente un exemple de détermination des paramètres $\theta_j$, $\alpha_{j,k}$, $n_{j,k}$ d'une fonction de réponse $f_{\theta_j, \alpha_{j,k}, n_{j,k}}$. Pour déterminer ces paramètres, on a simulé une détection d'une intensité de mesure $I_j$ et d'une intensité de référence $I_{ref,j}$ en faisant varier la concentration $c_k^*$ en $CH_4$ (axe des abscisses), et en $CO_2$ (axe des ordonnées). Pour réaliser les simulations, on a considéré une source de lumière 11, de type corps noir, émettant un spectre $S_j$ correspondant à une température $T_j$ de 450°C.

La figure 6A représente une évolution du ratio $\dfrac{I_j}{\hat{I}_{0,j}}$ calculé en fonction de différents couples de concentrations en $CH_4$ et en $CO_2$. A partir des points obtenus par calcul, on a procédé à un ajustement (fit) de façon à obtenir les paramètres $\theta_j$, $\alpha_{j,k}$, $n_{j,k}$ de telle sorte que la valeur de la fonction de réponse, pour chaque concentration en $CO_2$ et en $CH_4$, corresponde aux valeurs du ratio $\dfrac{I_j}{\hat{I}_{0,j}}$ calculé. Les valeurs $I_j$ ont été calculées application de la loi de Beer-Lambert, en utilisant les fonctions spectrales d'absorption $h_k$ des espèces gazeuses considérées. La valeur $\hat{I}_{0,j}$ est connue par la simulation de la source de lumière. Dans cet exemple, l'ajustement a été effectué:

- pour $CH_4$, en se basant sur une concentration nulle de $CO_2$, c'est-à-dire en considérant les valeurs du ratio $\dfrac{I_j}{\hat{I}_{0,j}}$ le long d'une ligne horizontale d'ordonnée 0.

- Pour $CO_2$, en se basant sur une concentration nulle de $CH_4$, c'est-à-dire en considérant les valeurs du ratio $\dfrac{I_j}{\hat{I}_{0,j}}$ le long d'une ligne verticale d'abscisse 0.

On peut ainsi estimer les paramètres $\theta_j$, $\alpha_{j,k}$, $n_{j,k}$ de la fonction de réponse correspondant au spectre d'illumination $S_j$. Cette opération est renouvelée pour l'ensemble des spectres d'illumination $S_j$.
La figure 6B représente, pour différents couples de concentrations en $CO_2$ et en $CH_4$, l'erreur relative entre les valeurs $\dfrac{I_j}{\hat{I}_{0,j}}$ calculées et les valeurs $\dfrac{\hat{I}_j}{\hat{I}_{0,j}}$ estimées. Les valeurs $\hat{I}_j$ ont été estimées en utilisant la fonction de réponse $f_{\theta_j, \alpha_{j,k}, n_{j,k}}$. Les estimations ont été effectuées pour chaque couple de concentrations en $CO_2$ et en $CH_4$. Dans la plage de concentrations considérées, l'erreur relative maximale est inférieure à 1.5%.
Pour mettre en oeuvre la minimisation décrite en lien avec l'expression (12), différents algorithmes ont été

EP 3 746 774 B1

testés, l'objectif étant d'identifier l'algorithme présentant le meilleur compromis erreur/temps de convergence. 5 algorithmes ont été comparés :

- algorithme de Nelder-Mead ;
- algorithme de Newton-Gradient conjugué, connu sous l'acronyme "Newton CG" ;
- algorithme Broyden-Fletcher-Goldfarb-Shanno, connu sous l'acronyme "BFGS" ;
- algorithme de type "brute", selon lequel on dispose de valeurs de l'intensité $\hat{I}_j$ préalablement établies, lors de la phase de calibration, pour différents couples de concentrations discrètes en $CO_2$ et en $CH_4$. Lors de la phase de mesure, le couple de concentrations sélectionné est celui pour lequel la valeur de l'intensité préalablement établie est la plus proche de l'intensité correspondant au cas testé.
- un algorithme de moindres carrés non linéaires "leastsq".

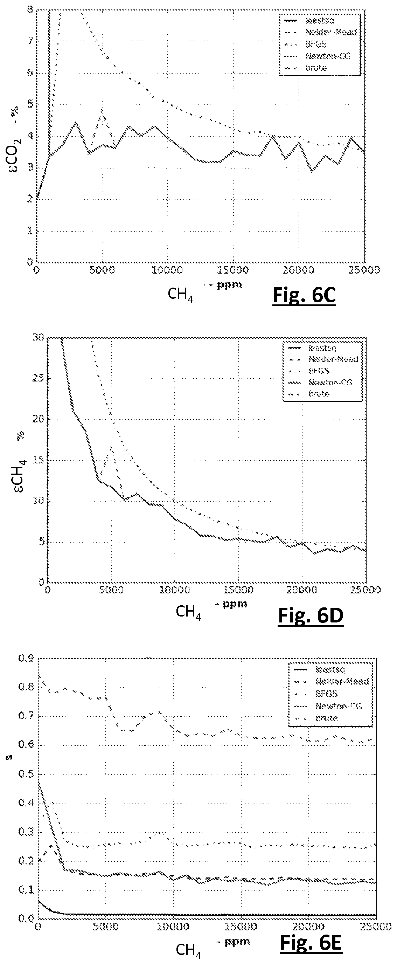

La figure 6C représente une évolution de l'erreur relative $\varepsilon CO_2$ affectant la détermination de la concentration de $CO_2$ (axe des ordonnées) en fonction de la concentration de $CH_4$ (axe des abscisses), en mettant en oeuvre les cinq algorithmes décrits ci-dessus. La concentration de $CO_2$ est fixe, et correspond à la concentration dans l'atmosphère, soit 400 ppm. La concentration de $CH_4$, repérée sur l'axe des abscisses, représente une augmentation progressive de la concentration en $CH_4$ résultant de la fuite. L'algorithme de Nelder-Mead conduit à des résultats moins satisfaisants que les quatre autres, dont les performances sont similaires et se superposent à la ligne continue traçant la performance de l'algorithme des moindres carrés non linéaires.

La figure 6D représente une évolution de l'erreur relative $\varepsilon CH_4$ affectant la détermination de la concentration de $CH_4$ (axe des ordonnées) en fonction de la concentration de $CH_4$ (axe des abscisses), en mettant en oeuvre les 5 algorithmes décrits ci-dessus. On en tire les mêmes conclusions qu'en lien avec la figure 6C.

La figure 6E représente une évolution de la durée de convergence de l'algorithme de minimisation (axe des ordonnées), en fonction de la concentration en $CH_4$ (axe des abscisses). On observe que l'algorithme des moindres carrés non linéaires mène à des temps de convergence plus faibles que les autres algorithmes testés.

On a simulé une détermination d'une concentration de $CO_2$ et de $CH_4$ en mettant en oeuvre un algorithme de minimisation de type moindres carrés non linéaires, dans un mélange gazeux dans lequel la concentration de $CO_2$ est de 400 ppm, la concentration de $CH_4$ variant entre 0 et 25000 ppm. 6 configurations ont été testées :

- 8 paliers de température $T_1...T_8$, variant entre 300 et 720 °C, régulièrement espacés par des incréments de 60°C (configuration a);
- 8 paliers températures $T_1...T_8$, variant entre 450 et 730 °C, régulièrement espacés par des incréments de 40° (configuration b);
- 8 paliers températures $T_1...T_8$, variant entre 600 et 740 °C, régulièrement espacés par des incréments de 20° (configuration c);
- 4 paliers températures $T_1...T_4$, variant entre 300 et 750 °C, régulièrement espacés par des incréments de 150° (configuration d);
- 4 paliers températures $T_1...T_4$, variant entre 450 et 750 °C, régulièrement espacés par des incréments de 100° (configuration e);
- 4 paliers températures $T_1...T_4$, variant entre 600 et 750 °C, régulièrement espacés par des incréments de 50° (configuration f).

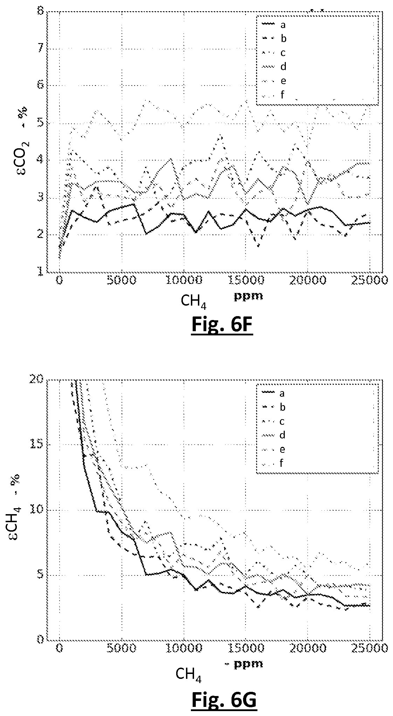

Les figures 6F et 6G montrent respectivement les évolutions des erreurs relatives $\varepsilon CO_2$ et $\varepsilon CH_4$ de quantification du $CO_2$ et du $CH_4$ selon les différentes configurations. On observe que l'invention est exploitable en combinant quatre températures, ce qui correspond à quatre spectres d'illumination différents. Les meilleures performances correspondent aux configurations combinant un nombre élevé de paliers de température et une importante plage de variation de la température. Cependant, plus le nombre de paliers en température augmente, plus le temps de mesure augmente. Un compromis doit donc être défini, de façon à obtenir une performance acceptable tout en conservant un temps de calcul raisonnable.

## Revendications

1.  Procédé d'analyse d'un gaz ($G$), pour estimer une quantité ($c_k$) de plusieurs espèces gazeuses ($G_k$) différentes, dites espèces gazeuses d'intérêt, potentiellement présentes dans le gaz analysé, chaque espèce gazeuse étant apte à engendrer une absorption d'un rayonnement lumineux dans une bande spectrale d'absorption ($\Delta_k$), le procédé comportant les étapes suivantes :

a) disposition du gaz analysé entre une source de lumière (11) et un photodétecteur de mesure (20), la source de lumière (11) étant apte à émettre un rayonnement d'illumination (12) se propageant à travers le gaz, le photodétecteur de mesure (20) étant apte à détecter un rayonnement (14) transmis par le gaz et à délivrer un signal de détection représentatif d'une intensité ($I_j$) du rayonnement détecté ;

b) illumination du gaz analysé (G) à l'aide de la source de lumière (11), le rayonnement d'illumination (12) s'étendant selon une bande spectrale, dite bande spectrale d'illumination ($\Delta_{12}$), recouvrant la bande spectrale d'absorption ($\Delta_k$) d'une pluralité d'espèces gazeuses d'intérêt, à chaque illumination correspondant un spectre ($S_j$), dit spectre d'illumination, du rayonnement d'illumination (12) ;

c) lors de l'illumination, détection, par le photodétecteur de mesure (20), d'une intensité ($I_j$) d'un rayonnement transmis (14) par le gaz analysé, dans au moins une bande spectrale de détection ($\Delta_{20}$) ;

d) réitération des étapes b) et c), en modifiant le spectre d'illumination ($S_j$) du rayonnement d'illumination (12);

e) détermination d'une quantité ($c_k$) de chacune des espèces gazeuses d'intérêt en fonction de l'intensité ($I_j$) du rayonnement détecté lors de chaque illumination, chaque intensité ($I_j$) étant associée à un spectre d'illumination ($S_j$);

le procédé étant **caractérisé en ce que** l'étape e) comporte :

- lors de chaque illumination, une estimation d'une intensité ($\hat{I}_{0,j}$), dite intensité non atténuée, qui serait mesurée par le photodétecteur de mesure (20) en l'absence de gaz *(G)*;
- lors de chaque illumination, une estimation de l'intensité détectée lors de l'étape c), en utilisant une fonction de réponse paramétrique f telle que $\hat{I}_j = \hat{I}_{0,j} f_{\theta_j, \alpha_{j,k}, n_{j,k}} (c_1 ... c_K)$, où

   ∘ $\hat{I}_{0,j}$ est l'estimation de l'intensité non atténuée lors de ladite illumination ;
   ∘ $\theta_j$ est un paramètre dépendant du spectre d'illumination ;
   ∘ $\alpha_{j,k}$ et $n_{j,k}$ sont des paramètres dépendant du spectre d'illumination et de chaque espèce gazeuse d'intérêt,
   o les paramètres associés à deux spectres d'illumination distincts ($S_j, S_{j-1}$) étant différents et préalablement définis;

- une obtention, pour chaque illumination, d'une comparaison entre l'intensité détectée par le photodétecteur ($I_j$), lors de l'étape c), et l'estimation de ladite intensité ($\hat{I}_j$);
- une détermination des quantités des espèces gazeuses d'intérêt en minimisant une combinaison arithmétique de chaque comparaison.

2. Procédé selon la revendication 1, dans lequel à chaque spectre d'illumination sont associés des paramètres dits spécifiques, ($\alpha_{j,k}$, $n_{j,k}$) définis pour chaque espèce gazeuse d'intérêt ($c_k$), au moins deux paramètres spécifiques respectivement définis pour deux espèces gazeuses d'intérêt distinctes étant différents les uns des autres.

3. Procédé selon l'une quelconque des revendications précédentes, dans lequel lors de l'étape e), l'intensité ($I_j$) mesurée lors de l'étape c) est normalisée par l'estimation de l'intensité non atténuée ($\hat{I}_{0,j}$).

4. Procédé selon l'une quelconque des revendications précédentes dans lequel chaque comparaison est un écart quadratique ($(\hat{I}_j - I_j)^2$), les quantités déterminées étant celles pour lesquelles une combinaison arithmétique de chaque comparaison se rapproche d'une valeur prédéterminée.

5. Procédé selon la revendication 4, dans lequel la combinaison arithmétique est une somme, les quantités déterminées ($c_k$) étant celles pour lesquelles la somme est minimale.

6. Procédé selon l'une quelconque des revendications précédentes, dans lequel l'étape e) met en oeuvre une méthode par moindres carrés non linéaire.

7. Procédé selon l'une quelconque des revendications précédentes, comportant également, lors de chaque illumination, une détection, par un photodétecteur de référence ($20_{ref}$) d'une intensité de référence ($I_{j,ref}$) d'un rayonnement de référence ($14_{ref}$), considéré comme n'ayant pas été absorbé par le gaz (G), l'étape e) comportant une prise en compte des intensités de référence ($I_{j,ref}$) respectivement détectées au cours de chaque illumination.

8. Procédé selon l'une quelconque des revendications précédentes, dans lequel chaque spectre d'illumination ($S_j$) correspond à une température ($T_j$) de la source de lumière.

9. Procédé selon l'une quelconque des revendications précédentes, comportant, préalablement à l'étape e), une phase de calibration, effectuée pour chaque spectre d'illumination ($S_j$), de façon à définir la fonction de réponse paramétrique ($f_{\theta_j, \alpha_{j,k}, n_{j,k}}$) associée au spectre d'illumination ($S_j$), la phase de calibration comportant les étapes suivantes :

cal-i) réalisation des étapes a) à c) en considérant un gaz de calibration, comportant une quantité connue d'au moins une espèce gazeuse d'intérêt ($c_k^*$), le gaz de calibration étant illuminé selon un spectre d'illumination ($S_j$), de façon à obtenir une intensité détectée par le photodétecteur de mesure (20) ou par un photodétecteur de calibration, considéré comme représentatif du photodétecteur de mesure ;

cal-ii) réitération de l'étape cal-i) en modifiant la quantité ($c_k$) de l'espèce gazeuse d'intérêt ;

cal-iii) prise en compte d'un modèle paramétrique de la fonction de réponse ($f_{\theta_j, \alpha_{j,k}, n_{j,k}}$);

cal-iv) à partir des intensités résultant de chaque étape cal-i) et du modèle paramétrique prise en compte lors de l'étape cal-iii), détermination d'au moins un paramètre ($\theta_j$, $\alpha_{j,k}$, $n_{j,k}$) de la fonction de réponse.

10. Procédé selon l'une quelconque des revendications précédentes, dans lequel la bande spectrale de détection ($\Delta_{20}$) recouvre des bandes spectrales d'absorption de plusieurs espèces gazeuses d'intérêt ($\Delta_k$).

11. Dispositif (1) d'analyse d'un gaz (G) comportant :

- une source de lumière (11), apte à émettre un rayonnement d'illumination (12), la source de lumière étant également apte à être modulée de telle sorte que le spectre du rayonnement d'illumination émis ($S_j$), dit spectre d'illumination, est variable dans une même bande spectrale d'illumination ($\Delta_{12}$) ;
- un photodétecteur de mesure (20), apte à détecter un rayonnement lumineux selon une bande spectrale de détection ($\Delta_{20}$);
- une enceinte (10), apte à recevoir le gaz, agencée de telle sorte que le photodétecteur de mesure (20) soit configuré pour détecter un rayonnement lumineux (14) ayant traversé le gaz ;
- un processeur (30) et une mémoire (32) relié audit processeur et comportant des instructions qui conduisent le processeur à mettre en oeuvre l'étape e) d'un procédé selon l'une quelconque des revendications 1 à 10, à partir du rayonnement détecté par le photodétecteur de mesure (20) suite à différentes illuminations du gaz (G), respectivement selon différents spectres d'illumination ($S_j$).

**Patentansprüche**

1. Verfahren zur Analyse eines Gases (G), um eine Menge ($c_k$) mehrerer unterschiedlicher Gasspezies ($G_k$), als Gasspezies von Interesse bezeichnet, zu ermitteln, die in dem analysierten Gas potenziell vorhanden sind, wobei jede Gasspezies dazu fähig ist, eine Absorption einer Lichtstrahlung in einem Absorptionsspektralband ($\Delta_k$) zu bewirken, wobei das Verfahren die folgenden Schritte umfasst:

a) Anordnen des analysierten Gases zwischen einer Lichtquelle (11) und einem optischen Messdetektor (20), wobei die Lichtquelle (11) dazu fähig ist, eine Beleuchtungsstrahlung (12) zu emittieren, die sich durch das Gas ausbreitet, wobei der optische Messdetektor (20) dazu fähig ist, eine von dem Gas durchgelassene Strahlung (14) zu detektieren und ein Detektionssignal bereitzustellen, das für eine Stärke ($I_j$) der detektierten Strahlung repräsentativ ist;

b) Beleuchten des analysierten Gases (G) mit Hilfe der Lichtquelle (11), wobei sich die Beleuchtungsstrahlung (12) gemäß einem Spektralband, als Beleuchtungsspektralband ($\Delta_{12}$) bezeichnet, erstreckt, welches das Absorptionsspektralband ($\Delta_k$) einer Vielzahl von Gasspezies von Interesse abdeckt, wobei jeder Beleuchtung ein Spektrum ($S_j$), als Beleuchtungsspektrum bezeichnet, der Beleuchtungsstrahlung (12) entspricht;

c) während des Beleuchtens, Detektieren, durch den optischen Messdetektor (20), einer Stärke ($I_j$) einer durch das analysierte Gas durchgelassenen Strahlung (14) in mindestens einem Detektionsspektralband ($\Delta_{20}$);

d) Wiederholen der Schritte b) und c) unter Modifizierung des Beleuchtungsspektrums ($S_j$) der Beleuchtungsstrahlung (12);

e) Bestimmen einer Menge ($c_k$) von jeder der Gasspezies von Interesse in Abhängigkeit von der Stärke ($I_j$) der während jeder Beleuchtung detektierten Strahlung, wobei jede Stärke ($I_j$) einem Beleuchtungsspektrum ($S_j$) zugeordnet ist;

wobei das Verfahren **dadurch gekennzeichnet ist, dass** Schritt e) Folgendes umfasst:

- während jeder Beleuchtung, Ermitteln einer Stärke ($\hat{I}_{0,j}$), als nicht abgeschwächte Stärke bezeichnet, die bei nicht vorhandenem Gas (G) durch den optischen Messdetektor (20) gemessen würde;
- während jeder Beleuchtung, Ermitteln der während des Schritts c) detektierten Stärke unter Verwendung einer parametrischen Antwortfunktion f, wie etwa $\hat{I}_j = \hat{I}_{0,j} \, f_{\theta j, \alpha j,k, nj,k} \, (c_1 \ldots c_K)$, wobei

- $\hat{I}_{0,j}$ die ermittelte nicht abgeschwächte Stärke während der Beleuchtung ist;
- $\theta_j$ ein von dem Beleuchtungsspektrum abhängiger Parameter ist;
- $\alpha_{j,k}$ und $n_{j,k}$ Parameter sind, die von dem Beleuchtungsspektrum und jeder Gasspezies von Interesse abhängen,
- wobei die Parameter, die zwei verschiedenen Beleuchtungsspektren ($S_j$, $S_{j-1}$) zugeordnet sind, unterschiedlich sind und vorab definiert werden;

- Erhalten, für jede Beleuchtung, eines Vergleichs zwischen der Stärke ($I_j$), die während des Schritts c) durch den optischen Detektor detektiert wird, und der ermittelten Stärke ($\hat{I}_j$);
- Bestimmen der Mengen der Gasspezies von Interesse durch Minimieren einer arithmetischen Kombination jedes Vergleichs.

2. Verfahren nach Anspruch 1, wobei jedem Beleuchtungsspektrum sogenannte spezifische Parameter ($\alpha_{j,k}$, $n_{j,k}$), die für jede Gasspezies von Interesse ($c_k$) definiert sind, zugeordnet sind, wobei sich mindestens zwei spezifische Parameter, die für jeweils zwei verschiedene Gasspezies definiert sind, voneinander unterscheiden.

3. Verfahren nach einem beliebigen der vorhergehenden Ansprüche, wobei während des Schritts e) die während des Schritts c) gemessene Stärke ($I_j$) durch die ermittelte nicht abgeschwächte Stärke ($\hat{I}_{0,j}$) normalisiert wird.

4. Verfahren nach einem beliebigen der vorhergehenden Ansprüche, wobei jeder Vergleich eine quadratische Abweichung (($\hat{I}_j - I_j$)$^2$) ist, wobei die bestimmten Mengen diejenigen sind, für die sich eine arithmetische Kombination jedes Vergleichs einem vorbestimmten Wert annähert.

5. Verfahren nach Anspruch 4, wobei die arithmetische Kombination eine Summe ist, wobei die bestimmten Mengen ($c_k$) diejenigen sind, für die die Summe minimal ist.

6. Verfahren nach einem beliebigen der vorhergehenden Ansprüche, wobei Schritt e) eine nichtlineare Methode der kleinsten Quadrate umsetzt.

7. Verfahren nach einem beliebigen der vorhergehenden Ansprüche, das ferner während jeder Beleuchtung das Detektieren, durch einen optischen Referenzdetektor ($20_{ref}$), einer Referenzstärke ($I_{j,ref}$) einer Referenzstrahlung ($14_{ref}$), die als durch das Gas (G) nicht absorbiert betrachtet wird, umfasst, wobei Schritt e) eine Berücksichtigung der während jeder Beleuchtung jeweils detektierten Referenzstärken ($I_{j,ref}$) umfasst.

8. Verfahren nach einem beliebigen der vorhergehenden Ansprüche, wobei jedes Beleuchtungsspektrum ($S_j$) einer Temperatur ($T_j$) der Lichtquelle entspricht.

9. Verfahren nach einem beliebigen der vorhergehenden Ansprüche, das vor dem Schritt e) eine Kalibrierphase umfasst, die für jedes Beleuchtungsspektrum ($S_j$) durchgeführt wird, um die parametrische Antwortfunktion ($f_{\theta j, \alpha j,k, nj,k}$), die dem Beleuchtungsspektrum ($S_j$) zugeordnet ist, zu definieren, wobei die Kalibrierphase die folgenden Schritte umfasst:

cal-i) Durchführen der Schritte a) bis c) unter Betrachtung eines Kalibriergases, das eine bekannte Menge mindestens einer Gasspezies von Interesse ($c_k^*$) umfasst, wobei das Kalibriergas gemäß einem Beleuchtungsspektrum ($S_j$) beleuchtet wird, um eine durch den optischen Messdetektor (20) oder durch einen optischen Kalibrierdetektor, der als für den optischen Messdetektor repräsentativ betrachtet wird, detektierte Stärke zu erhalten;

cal-ii) Wiederholen des Schritts cal-i) unter Modifizierung der Menge ($c_k^*$) der Gasspezies von Interesse;
cal-iii) Berücksichtigen eines parametrischen Modells der Antwortfunktion ($f_{\theta j, \alpha j,k, nj,k}$);
cal-iv) anhand der Stärken, die sich aus jedem Schritt cal-i) ergeben, und des während des Schritts cal-iii) berücksichtigten parametrischen Modells, Bestimmen mindestens eines Parameters ($\theta_j$, $\alpha_{j,k}$, $n_{j,k}$) der Antwortfunktion.

10. Verfahren nach einem beliebigen der vorhergehenden Ansprüche, wobei das Detektionsspektralband ($\Delta_{20}$) die Absorptionsspektralbänder mehrerer Gasspezies von Interesse ($\Delta_k$) abdeckt.

11. Vorrichtung (1) zur Analyse eines Gases (G), die Folgendes umfasst:

- eine Lichtquelle (11), die dazu fähig ist, eine Beleuchtungsstrahlung (12) zu emittieren, wobei die Lichtquelle ferner dazu fähig ist, moduliert zu werden, sodass das Spektrum der emittierten Beleuchtungsstrahlung ($S_j$), als Beleuchtungsspektrum bezeichnet, in einem gleichen Beleuchtungsspektralband ($\Delta_{12}$) variabel ist;
- einen optischen Messdetektor (20), der dazu fähig ist, eine Lichtstrahlung gemäß einem Detektionsspektralband ($\Delta_{20}$) zu detektieren;
- eine Kammer (10), die dazu fähig ist, das Gas aufzunehmen, und die so angeordnet ist, dass der optische Messdetektor (20) dazu konfiguriert ist, eine Lichtstrahlung (14), die das Gas durchquert hat, zu detektieren;
- einen Prozessor (30) und einen Speicher (32), der mit dem Prozessor verbunden ist und Anweisungen umfasst, die den Prozessor dazu veranlassen, den Schritt e) eines Verfahrens nach einem beliebigen der Ansprüche 1 bis 10 anhand der durch den optischen Messdetektor (20) detektierten Strahlung und im Anschluss an unterschiedliche Beleuchtungen des Gases (G) gemäß jeweils unterschiedlichen Beleuchtungsspektren ($S_j$) umzusetzen.

## Claims

1. Method for analysing a gas (G), with a view to estimating an amount ($c_k$) of a plurality of different gas species ($G_k$), called the gas species of interest, potentially present in the analysed gas, each gas species being able to absorb light radiation in an absorption spectral band ($\Delta_k$), the method comprising the following steps:

a) placing the analysed gas between a light source (11) and a measuring photodetector (20), the light source (11) being able to emit illumination radiation (12) that propagates through the gas, the measuring photodetector (20) being able to detect radiation (14) transmitted by the gas and to deliver a detection signal representative of an intensity ($I_j$) of the detected radiation;
b) illuminating the analysed gas (G) using the light source (11), the illumination radiation (12) occupying a spectral band, called the illumination spectral band ($\Delta_{12}$), covering the absorption spectral band ($\Delta_k$) of a plurality of gas species of interest, one spectrum ($S_j$), called the illumination spectrum, of the illumination radiation (12) corresponding to each illumination;
c) during the illumination, detecting, by means of the measuring photodetector (20), an intensity ($I_j$) of radiation (14) transmitted by the analysed gas, in at least one detection spectral band ($\Delta_{20}$);
d) reiterating steps b) and c), while modifying the illumination spectrum ($S_j$) of the illumination radiation (12);
e) determining an amount ($c_k$) of each of the gas species of interest depending on the intensity ($I_j$) of the radiation detected during each illumination, each intensity ($I_j$) being associated with one illumination spectrum ($S_j$);

the method being **characterized in that** step e) comprises:

- during each illumination, estimating an intensity ($\hat{I}_{0,j}$), called the unattenuated intensity, that would be measured by the measuring photodetector (20) in the absence of gas (G);
- during each illumination, estimating the intensity detected in step c), using a parametric response function f such that $\hat{I}_j = \hat{I}_{0,j} f_{\theta j, \alpha j, k, nj, k} (c_{1 \ldots} c_K)$, where

  ∘ $\hat{I}_{0,j}$ is an estimate of the unattenuated intensity during said illumination;
  ∘ $\theta_j$ is a parameter dependent on the illumination spectrum;
  ∘ $\alpha_{j,k}$ and $n_{j,k}$ are parameters dependent on the illumination spectrum and on each gas species of interest,
  ∘ the parameters associated with two distinct illumination spectra ($S_j$, $S_{j-1}$) being different and defined beforehand;

- obtaining, for each illumination, a comparison between the intensity ($I_j$) detected by the photodetector, in step c), and the estimate ($\hat{I}_j$) of said intensity;
- determining the amounts of the gas species of interest by minimizing an arithmetic combination of each comparison.

14

**2.** Method according to Claim 1, wherein each illumination spectrum is associated with parameters, called specific parameters ($\alpha_{j,k}$, $n_{j,k}$), defined for each gas species of interest ($c_k$), at least two specific parameters defined for two respective distinct gas species of interest being different from each other.

**3.** Method according to any one of the preceding claims, wherein, in step e), the intensity ($I_j$) measured in step c) is normalized by the estimate ($\hat{I}_{0,j}$) of the unattenuated intensity.

**4.** Method according to any one of the preceding claims, wherein each comparison is a squared deviation (($\hat{I}_j - I_j$)$^2$), the amounts determined being those for which an arithmetic combination of each comparison approaches a predetermined value.

**5.** Method according to Claim 4, wherein the arithmetic combination is a sum, the determined amounts ($c_k$) being those for which the sum is minimum.

**6.** Method according to any one of the preceding claims, wherein step e) implements a non-linear least squares method.

**7.** Method according to any one of the preceding claims, also comprising, during each illumination, detecting, by means of a reference photodetector ($20_{ref}$), a reference intensity ($I_{j,ref}$) of reference radiation ($14_{ref}$), considered not to have been absorbed by the gas (G), step e) comprising taking into account the respective reference intensities ($I_{j,ref}$) detected during each illumination.

**8.** Method according to any one of the preceding claims, wherein each illumination spectrum ($S_j$) corresponds to one temperature ($T_j$) of the light source.

**9.** Method according to any one of the preceding claims, comprising, prior to step e), a calibration phase, performed for each illumination spectrum ($S_j$), so as to define the parametric response function ($f_{\theta j, \alpha j,k,nj,k}$) associated with the illumination spectrum ($S_j$), the calibration phase comprising the following steps:

cal-i) carrying out steps a) to c) on a calibration gas, containing a known amount of at least one gas species of interest ($c_k^*$), the calibration gas being illuminated with an illumination spectrum ($S_j$), so as to obtain an intensity detected by the measuring photodetector (20), or by a calibration photodetector, considered representative of the measuring photodetector;

cal-ii) reiterating step cal-i) while modifying the amount ($c_k^*$) of the gas species of interest;
cal-iii) taking into account a parametric model of the response function ($f_{\theta j, \alpha j,k,nj,k}$);
cal-iv) on the basis of the intensities resulting from each step cal-i) and of the parametric model taken into account in step cal-iii), determining at least one parameter ($\theta_j$, $\alpha_{j,k}$, $n_{j,k}$) of the response function.

**10.** Method according to any one of the preceding claims, wherein the detection spectral band ($\Delta_{20}$) covers absorption spectral bands of a plurality of gas species of interest ($\Delta_k$).

**11.** Device (1) for analysing a gas (G), comprising:

- a light source (11), able to emit illumination radiation (12), the light source also being able to be modulated in such a way that the spectrum of the emitted illumination radiation ($S_j$), called the illumination spectrum, varies in a given illumination spectral band ($\Delta_{12}$);
- a measuring photodetector (20), able to detect light radiation in a detection spectral band ($\Delta_{20}$);
- an enclosure (10), able to receive the gas, said enclosure being arranged so as to configure the measuring photodetector (20) to detect light radiation (14) having passed through the gas;
- a processor (30) and a memory (32) coupled to said processor and comprising instructions which cause the processor to implement step e) of a method according to any one of Claims 1 to 10, on the basis of the radiation detected by the measuring photodetector (20) following various illuminations of the gas (G), with various respective illumination spectra ($S_j$).

**Fig. 1**

**Fig. 2**

**Fig. 3**

**Fig. 4**

**Fig. 5A**

**Fig. 5B**

**Fig. 6A**

**Fig. 6B**

**Fig. 6C**

**Fig. 6D**

**Fig. 6E**

**Fig. 6F**

**Fig. 6G**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007064370 A2
- US 2009213380 A1

- FR 1658243